(19) Europäisches Patentamt

European Patent Office

Office européen des brevets

(11) **EP 0 854 778 B1**

(12) **EUROPÄISCHE PATENTSCHRIFT**

(45) Veröffentlichungstag und Bekanntmachung des Hinweises auf die Patenterteilung:
**11.08.1999 Patentblatt 1999/32**

(21) Anmeldenummer: 96945150.9

(22) Anmeldetag: 02.10.1996

(51) Int. Cl.[6]: **B29C 45/77**, B29C 45/76

(86) Internationale Anmeldenummer:
**PCT/DE96/01895**

(87) Internationale Veröffentlichungsnummer:
**WO 97/12740 (10.04.1997 Gazette 1997/16)**

(54) **VERFAHREN ZUR REGELUNG DES WERKZEUGINNENDRUCKVERLAUFS AN EINER ZYKLISCH ARBEITENDEN MASCHINE**

PROCESS FOR REGULATING THE TOOL INNER PRESSURE CURVE OF A CYCLICALLY WORKING MACHINE

PROCEDE DE REGULATION DE LA COURBE DE PRESSION INTERNE D'OUTILS DANS UNE MACHINE A FONCTIONNEMENT CYCLIQUE

(84) Benannte Vertragsstaaten:
**AT CH DE FR GB IT LI**

(30) Priorität: 02.10.1995 DE 19536566

(43) Veröffentlichungstag der Anmeldung:
**29.07.1998 Patentblatt 1998/31**

(73) Patentinhaber: **Arburg GmbH & Co.**
**72290 Lossburg (DE)**

(72) Erfinder:
• **HEHL, Karl**
**D-72290 Lossburg (DE)**
• **WYBITUL, Oliver, Kay**
**D-52499 Baesweiler (DE)**
• **GIERTH, Michael, Manfred**
**52064 Aachen (DE)**
• **HUTH, Joachim**
**D-42655 Solingen (DE)**

(74) Vertreter: **Reinhardt, Harry et al**
**Mayer, Frank, Reinhardt,**
**Schwarzwaldstrasse 1A**
**75173 Pforzheim (DE)**

(56) Entgegenhaltungen:
**EP-A- 0 233 548          EP-A- 0 495 266**
**EP-A- 0 536 448          EP-A- 0 536 449**
**DE-A- 3 639 292          JP-A- 57 142 337**

• **KUNSTSTOFFE, Bd. 77, Dezember 1987, CARL HANSER VERLAG, MÜNCHEN, Seiten 1232-1236, XP002029029 RIES AACHEN STILLHARD: "Druckübertragung beim Spritzgiessen durch verbessertes Umschalten auf Nachdruck"**

**Beschreibung**

Die Erfindung betrifft ein Verfahren Zur Regelung des Werkzeuginnendrucks an einer zyklisch arbeitenden Maschine nach den Ansprüchen 1, 6 oder 10.

Das Verfahren kann bevorzugt in der kunststoffverarbeitenden und metallverarbeitenden Industrie eingesetzt werden, beispielsweise in Verbindung mit Kunststoff-Spritzgießmaschinen, Blasformmaschinen, Druckgußmaschinen, Aluminium-Druckgußmaschinen, jedoch auch in Verbindung mit Pressen oder Schweißapparaten, sofern dabei zyklisch verlaufende Prozesse durchgeführt werden. Soweit im folgenden von Prozeßkurvenverläufen die Rede ist, so werden darunter nicht nur unmittelbar erfaßbare Verläufe verstanden, sondern auch die aus den erfaßten berechenbaren Prozeßkurvenverläufe, wie z.B. Ableitungen, Integrale und dergleichen.

Aus der EP-A 233 548 ist es bekannt, zyklussynchron die Prozeßkurvenverläufe des Hydraulikdrucks zu erfassen. Um eine Umschaltpunktregelung zwischen Verdichtung und Nachdruckphase zu erzielen, werden bestimmte Kriterien aufgestellt, die anhand des Hydraulikdruckverlaufes überprüft werden. Überprüft wird z.B., daß lediglich einmal der Druck zum Umschalten auf Nachdruck erreicht wird, daß der Druckverlauf kein Überschwingen und keine Druckspitze aufweist, jedoch werden die gesamten Überprüfungen nicht anhand des Werkzeuginnendruckes vorgenommen. Der Nachteil dieses, auf den Hydraulikdruck ausgerichteten Vorgehens ist jedoch, daß dieser Druck einstellungs- und maschinenabhängig und damit schwer auswertbar ist. Eine Regelung der Nachdruckzeit einschließlich entsprechender Kriterien läßt sich dort nicht entnehmen.

In der DE-A 30 21 978 ist ein Verfahren zur Regelung des Werkzeuginnendruckverlaufs an einer zyklisch arbeitenden Maschine beschrieben, wobei als Entscheidungskriterien für die Ermittlung des Umschaltpunktes sowohl der Werkzeuginnendruckverlauf als auch der Hydraulikdruckverlauf überwacht wird. Um ein druckstoßfreies Umschalten von der Einspritzphase zur Nachdruckphase und von dieser zur Erstarrungsphase zu erzielen, wird, sobald der Istwert des Werkzeugdrucks den Anfang-Sollwert der Nachdruckphase erreicht, der Hydraulikdruck geregelt und am Übergabepunkt findet eine Istwert-Vorgabe des Druckes als Anfang-Sollwert der Erstarrungsphase statt. Dadurch ist es zwar möglich, den Werkzeuginnendruck ineinander überzuführen, jedoch ist ein harmonischer kontinuierlicher Druckverlauf dadurch noch nicht gewährleistet.

Aus 'Kunststoffe', Band 77, Dezember 87, Carl Hanser Verlag München, Seiten 1232 bis 1236 ist eine Untersuchung über die "Druckübertragung beim Spritzgießen durch verbessertes Umschalten auf Nachdruck" bekannt. Im Ergebnis zeigt die Untersuchung, daß Druckspitzen im hydraulischen System vermieden werden sollen, damit sie nicht ins Werkzeug übertragen werden, wobei als Stellgrößen im Rahmen der Geschwindigkeitsregelung die Zeit oder der Weg betrachtet werden. Daraus ist zwar zu erkennen, daß die hydraulischen Schwankungen zu Schwankungen in der Steigung des Werkzeuginnendrucks als auch des Drucks selbst führen, daraus ist jedoch noch nicht zu erkennen, wie der Fachmann vorgehen muß, um den Umschaltpunkt so effektiv zu verändern, daß diese Schwankungen nicht auftreten.

Aus dem Patent Abstract der JP 57 142 337 A ist ein Verfahren bekannt, bei dem der Versiegelungspunkt im Rahmen einer Werkzeuginnendrucküberprüfung genauer betrachtet wird. Als Kriterium zur Ermittlung des Versiegelungspunktes ist ein Nulldurchgang der zweiten Ableitung des Werkzeuginnendrucks verwendet. Für diesen Zeitpunkt ist ein Sollwert für den Istwert des Werkzeuginnendrucks gesetzt. Ist zum Versiegelungszeitpunkt der Werkzeuginnendruck kleiner als der Sollwert, wird für den folgenden Zyklus das Nachdruckniveau erhöht. Ist zum Versiegelungszeitpunkt der Innendruck großer als der Sollwert, wird für den folgenden Zyklus das Nachdruckniveau abgesenkt. Ziel des Verfahrens ist es, zu einem charakteristischen Zeitpunkt des Werkzeuginnendruckverlaufs bei Abweichungen von einem definierten Druckreferenzwert das Nachdruckniveau anzupassen, um die Variationen der Druckwerte am Meßzeitpunkt von Zyklus zu Zyklus zu reduzieren. Stellgröße ist hier das Nachdruckniveau. Eine Beeinflussung der Nachdruckzeit erfolgt nicht. Mit einer Umschaltpunktregelung zwischen Füllphase und Nachdruckphase hat dieses Verfahren nichts zu tun.

Ausgehend von diesem Stand der Technik liegt der vorliegenden Erfindung die Aufgabe zugrunde, den Zyklus an derartigen Maschinen zu optimieren und zu überwachen, um qualitativ hochwertige Teile zu erzielen.

Diese Aufgabe wird durch ein Verfahren mit den Merkmalen der Ansprüche 1, 6 oder 10 gelöst.

Überprüft wird nun der Werkzeuginnendruckverlauf mit Hilfe der Differentialrechnung. Während der verschiedenen Phasen eines Zyklus wird hierzu dieser Werkzeuginnendruckverlauf aufgezeichnet. Zielt man auf einen optimalen Umschaltpunkt zwischen Einspritz- und Nachdruckphase ab, so erfolgt eine Überprüfung der Kurve auf monotones Steigen nach Anspruch 1 oder 6. Ergibt sich kein monoton steigender Verlauf, so werden die Zeit oder der Weg bis zum Umschaltpunkt verändert, bis ein optimaler Umschaltpunkt ermittelt ist. Zielt man auf eine optimale Nachdruckzeit bis zur Versiegelung des Angusses ab, so wird die Kurve gemäß Anspruch 10 auf konstantes Fallen im Bereich des Nachdruckendes, also daraufhin überprüft, daß in der Kurve kein Knick- oder Steigungsunterschied zwischen benachbarten Punkten ist. Auch die Nachdruckzeit kann optimiert werden. Dadurch kann die Zykluszeit ohne Verlust an Qualität optimiert werden.

Kurzbeschreibung der Figuren

Fig. 1, 2     den Werkzeuginnendruckverlauf und Hydraulikdruckverlauf bei ausreichender und zu kurzer Nachdruckzeit und bei einem teilkristallinen Material,

Fig. 3, 4     Darstellungen gemäß Fig. 1, 2 bei Verwendung eines amorphen Materials,

Fig. 5, 6     den Werkzeuginnendruckverlauf, den Schneckenweg sowie den Verlauf der Ableitung zweiten Grades hinsichtlich des Werkzeuginnendrucks nach der Zeit zur Ermittlung eines Umschaltpunkts bei einem optimalen Umschaltpunkt und einer zu frühen Umschaltung,

Fig. 7     den Verfahrensablauf in Form eines Blockdiagramms zur Ermittlung einer optimalen Nachdruckzeit,

Fig. 8     den Verfahrensablauf anhand eines ßlockdiagramms zur Ermittlung eines optimalen Umschaltzeitpunkts,

Fig. 9     eine schematische Darstellung der an einer Kunststoff-Spritzgießmaschine vorgesehenen Elemente,

Fig. 10     einen schematischen Verfahrensablauf hinsichtlich einer Qualitätsregelung,

Fig. 11     eine Darstellung gemäß Fig. 5 mit einem Verlauf der Ableitung des Werkzeuginnendrucks nach dem Weg.

Das Verfahren und die hierzu erforderliche Vorrichtung wird im folgenden anhand einer Spritzgießmaschine, vorzugsweise einer Spritzgießmaschine zur Verarbeitung von plastischen Massen, wie Kunststoffen oder Pulvermassen erläutert. Das Verfahren läßt sich jedoch wie eingangs angegeben, auch problemlos in anderen Bereichen einsetzen, in denen zyklisch ablaufende Prozesse zur Herstellung (Urformung) oder Bearbeitung (Umformung) von Produkten eingesetzt werden.

Das Verfahren dient der Regelung des Werkzeuginnendruckverlaufs an einer zyklisch arbeitenden Maschine. Dies beruht darauf, daß sich herausgestellt hat, daß der Werkzeuginnendruck Pwi am ehesten geeignet ist, Unstimmigkeiten anzuzeigen, wenn es darum geht, optimal qualitativ hochwertige Produkte herzustellen. Bei diesen Maschinen gestaltet sich der Herstellungsablauf der Produkte etwa so, wie er im folgenden für eine Kunststoff-Spritzgießmaschine näher erläutert wird.

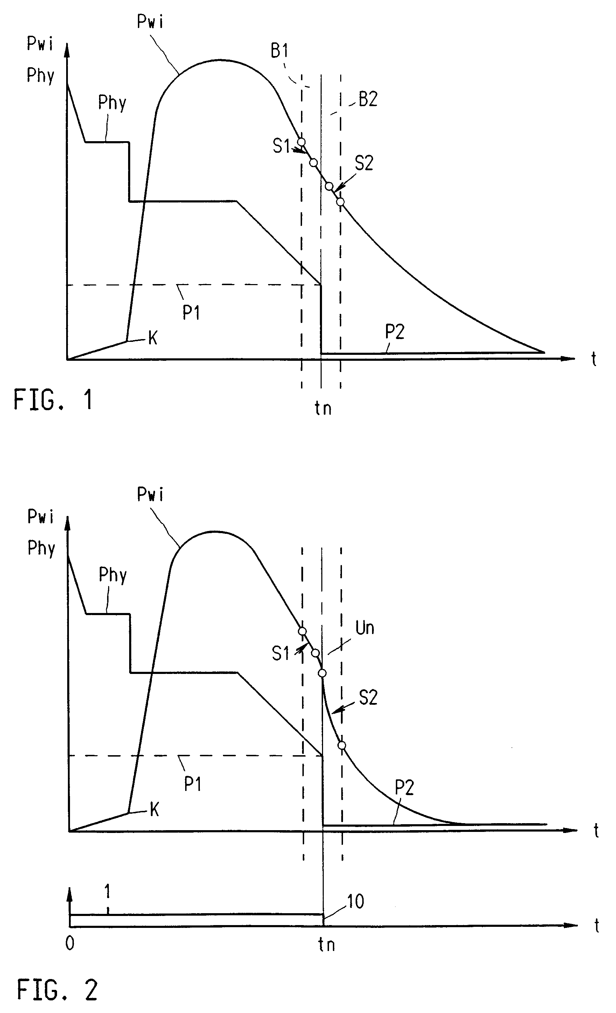

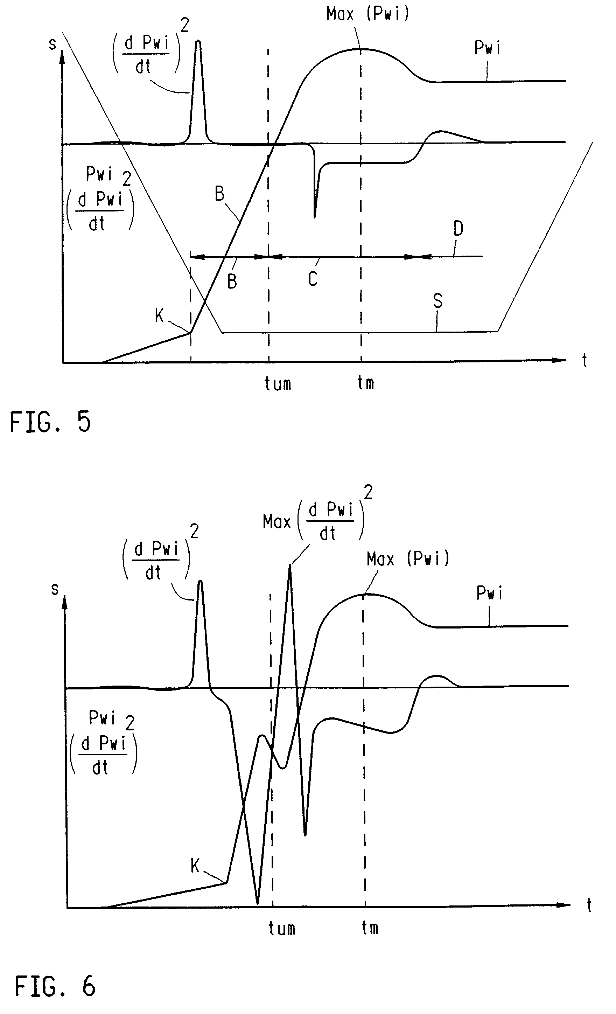

Ein Einspritzmittel 31 einer Spritzgießeinheit, wie z.B. eine Förderschnecke oder ein Einspritzkolben spritzen Material in einen Formhohlraum 32 einer Spritzgießform 34 in einer Werkzeugschließeinheit 33 ein. Die Vorrichtung besitzt Sensormittel wie zum Beispiel einen Werkzeuginnendrucksensor 11 und einen Temperaturfühler 12 im Bereich der Spritzgießeinheit. Bei der Bewegung des Fördermittels wird zunächst der Formhohlraum allmählich gefüllt, wobei sich gemäß Fig. 1 der Werkzeuginnendruck zunächst ganz allmählich erhöht. Ist der Werkzeuginnendrucksensor nicht angußnah angeordnet, so kann es auch zu einem verspäteten Einsetzen des Prozeßkurvenverlaufes kommen, wie dies in den Fign. 5 und 6 dargestellt ist. Bevorzugt wird jedoch eine angußnahe Anordnung des Werkzeuginnendrucksensors 11, da sich ansonsten zumindest bei dünnwandigen Teilen Probleme hinsichtlich der Erfassung des Werkzeuginnendrucks Pwi ergeben können. In der Höhe des Knicks K in der Werkzeuginnendruckkurve Pwi ist der Formhohlraum nun gefüllt. Das Fördermittel arbeitet nun jedoch weiter, um noch mehr Material in den Formhohlraum in einer Kompressionsphase hineinzupressen. Zu diesem Zeitpunkt kommt das Fördermittel 31 an einen Punkt, an dem eine weitere Vorwärtsbewegung in Richtung auf den Formhohlraum nicht mehr möglich ist, so daß eine Weg- oder Geschwindigkeitsregelung nicht mehr erfolgen kann. Zu diesem Umschaltzeitpunkt $t_{um}$ wird auf eine Druckregelung umgeschaltet und eine Nachdruckregelung beginnt, gleichzusetzen etwa mit Bereich C in Fig. 5.

Der an einer Maschine eingestellte Zeitpunkt der Umschaltung bestimmt z.B., wann vom geschwindigkeitsgeregelten Einspritzen auf den druckgeregelten Nachdruckbereich umgeschaltet wird. Der Umschaltpunkt sollte möglichst mit der volumetrischen Füllung des Formhohlraums 32 übereinstimmen, da der Formhohlraum mit einer definierten Geschwindigkeit gefüllt werden soll, jedoch die in der Nachdruckphase auftretende Schwindung durch ein vorgegebenes Druckprofil ausgeglichen werden muß. Druckschwankungen und Druckspitzen müssen jedoch am Umschaltpunkt nach Möglichkeit vermieden werden, damit sich ein stetiger und harmonischer Übergang zwischen Einspritzphase und Nachdruckphase ergibt, so daß keine negativen Einflüsse die Qualität des Formteils beeinträchtigen können.

Im Bereich C des Nachdrucks tritt dann auch ein Maximum Max(Pwi) des Werkzeuginnendrucks Pwi auf. Nach Überschreiten des Maximums sinkt der Druck während des Abkühlens des Formteils allmählich ab. Hier ist nun entscheidend festzustellen, wann eine Versiegelung des Formteils im Werkzeug stattfindet. Dieser Zeitpunkt ist gleichzusetzen mit einer optimalen Nachdruckzeit. Wird die Nachdruckzeit zu lang eingestellt, kann sie zur zykluszeitbestimmenden Größe werden und damit die Produktivität und Wirtschaftlichkeit des Prozesses reduzieren. Ist sie jedoch zu kurz, so wird das Formteil nicht versiegelt und Schmelze tritt aus dem Werkzeug aus. Dieser Masseverlust beeinträchtigt die Teilequalität und deren Reproduzierbarkeit.

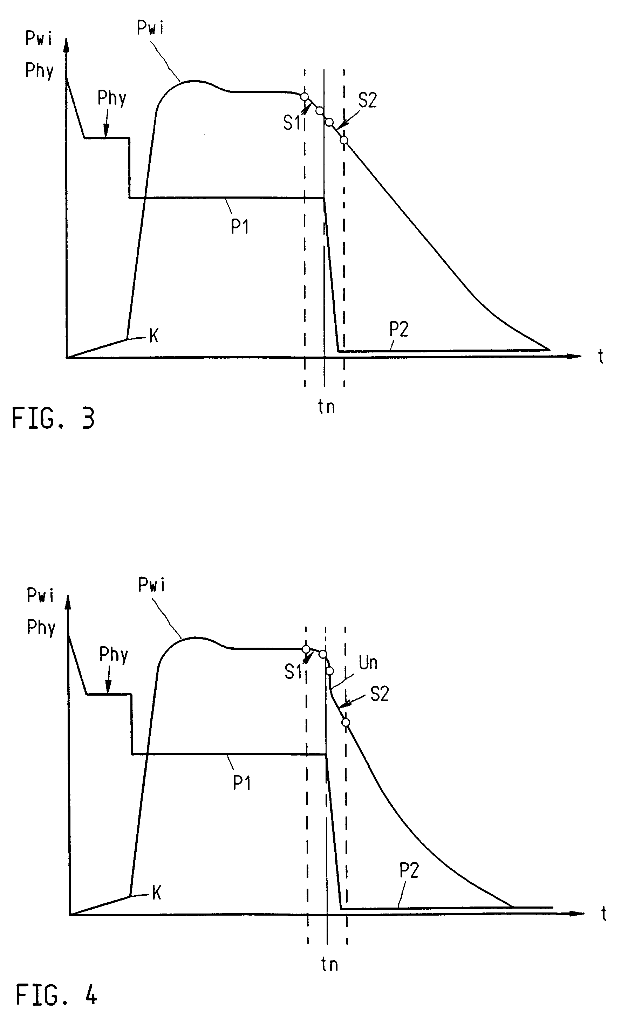

Die Fign. 1 und 2 unterscheiden sich von den Fign. 3 und 4 dadurch, daS in den Fign. 3 und 4 ein amorphes Material verarbeitet wird, während in Fign. 1 und 2 teilkristallines Material verarbeitet wird. Da bei dem amorphen Material die Formung des Produkts längere Zeit in Anspruch nimmt, muß dort auch der Werkzeuginnendruck Pwi für längere Zeit aufrecht erhalten werden.

In den Fign. 1-4 ist auch aufgetragen der Hydraulikdruck Phy. Es versteht sich von selbst, daß dieser Hydraulikdruck an einer hydraulischen Maschine zwar als Stellgröße für den Werkzeuginnendruck herangezogen werden kann, sich jedoch ein ähnliches Bild bei Anwendung anderer Antriebe wie z.B. bei elektromechanischen Antrieben ergibt, wobei dann der Hydraulikdruck Phy durch einen Kraftverlauf ersetzt ist. Der Hydraulikdruck ist zu Beginn der Füllphase hoch, um möglichst schnell eine Füllung des Formhohlraums 31 zu erreichen. In der Nachdruckphase befindet sich der Hydraulikdruck dann auf einem Niveau P1, von dem er bei Ende der Nachdruckzeit auf ein Niveau P2 absinkt.

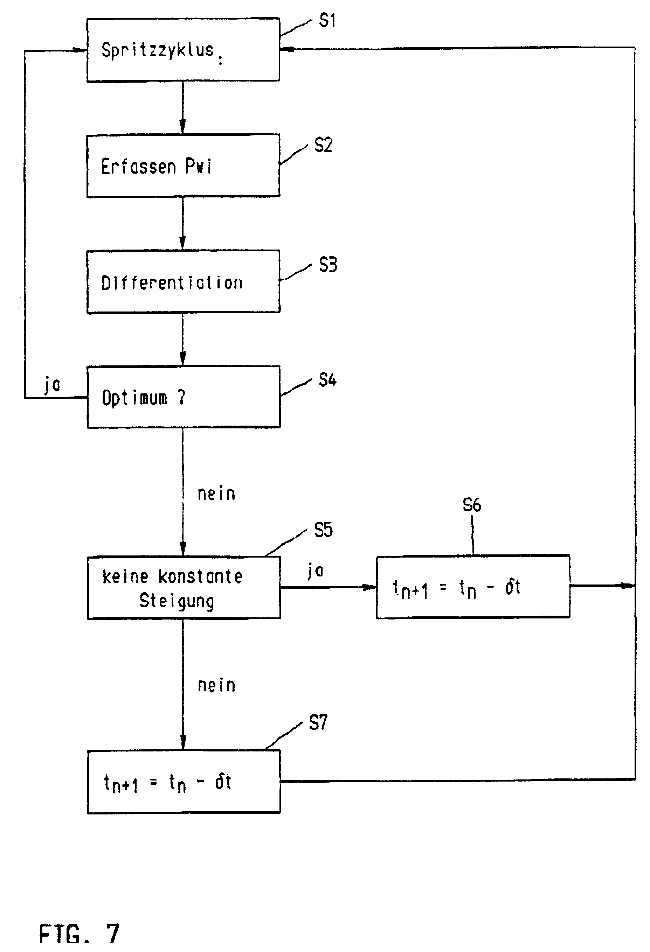

Die bisher angesprochenen Prozeßkurvenverläufe, aber auch die in den Fign. 5 und 6 dargestellten werden nun während der Durchführung eines Spritzzyklus gemäß Schritt S1 zumindest über der Zeit t und/oder über dem vom Fördermittel 31 zurückgelegten Weg s gemäß Schritt S2 erfaßt. Mit Mitteln der Differentialrechnung werden gemäß Schritt S3 die Prozeßkurvenverläufe, im wesentlichen jedoch der Werkzeuginnendruckverlauf nach der Zeit t oder dem Weg s differenziert. Sodann erfolgt in Schritt S4 eine Überprüfung dahingehend, ob sich anhand der ermittelten Ableitungen ersten, zweiten und dritten Grades monotone bzw. konstante Steigungen ermitteln lassen. Ist das Optimum noch nicht erreicht, so wird in Fig. 7, welche ein Beispiel für einen Regler der Nachdruckzeit darstellt, in Schritt S5 überprüft, ob keine konstante Steigung, also z.B. ein Knick vorliegt, wie es z. B. in Fig. 2 und 4 dargestellt ist. Liegt keine konstante Steigung, genauer gesagt, kein konstantes Fallen vor, so wird im Beispiel der Fig. 7 die Nachdruckzeit tn erhöht zu

$$tn + 1 = tn + \delta t.$$

Damit will man erreichen, daß der sich infolge eines zu frühen Abbaus des Nachdrucks ergebende Abfall des Werkzeuginnendrucks infolge eines Austretens von Material beim nächsten Spritzzyklus vermieden wird (Schritt S6). Mit der geänderten Nachdruckzeit tn wird dann der nächste Spritzzyklus durchgeführt und, falls sich bereits ein Optimum ergibt, werden im folgenden nur noch die Schritte S1 bis S4 durchgeführt.

Ein konstant fallender Verlauf in diesem Bereich ergibt sich aber auch dann, wenn die Nachdruckzeit tn zu lang gewählt ist. Aus diesem Grunde kann eine Regelung dahingehend vorgesehen sein, daß auch dann, wenn sich in Schritt S5 ergibt, daß eine konstante Steigung vorliegt, eine weitere Veränderung der Nachdruckzeit tn vorgenommen wird. In diesem Fall wird nun die Nachdruckzeit tn gemäß S7 geändert zu

$$tn + 1 = tn - \delta t.$$

Die Nachdruckzeit wird also reduziert und der nächste Spritzzyklus durchgeführt. Diese Reduzierung der Nachdruckzeit findet solange statt, bis sich wieder keine konstante Steigung einstellt. Wird nun die Nachdruckzeit geringfügig erhöht, so ergibt sich eine optimale Nachdruckzeit tn.

Diese Regelung der Nachdruckzeit tn kann zunächst dadurch vorgenommen werden, daß eine Vielzahl von Punkten entlang des Werkzeuginnendruckverlaufs überprüft wird, und bei Auftreten keiner konstanten Steigung in einem geschlossenen Regelkreis die Nachdruckzeit tn auf einen Wert geregelt wird, bei dem eine konstante Steigung gerade nicht mehr auftritt. Zur Überprüfung wird der Werkzeuginnendruckverlauf Pwi einmal über die Zeit t differenziert und es wird der Wert S1 der Steigung in einem Bereich B1 vor dem Punkt tn und der Wert S2 in einem Bereich B2 nach dem Punkt bestimmt. Ergibt sich bei Division des Wertes S1 durch den Wert S2 ein Wert von ungefähr 1, so liegt eine Stetigkeit vor.

Der Suchalgorithmus zum Auffinden eines Knicks Un kann jedoch beschleunigt werden, wenn die Überprüfung z.B. ausgehend von dem Punkt erfolgt, an dem sich das Digitalsignal "Nachdruckende" 10 in Fig. 2 ergibt. Alternativ zum Digitalsignal "Nachdruckende" kann man auch die negative Flanke im Hydraulikdruck Phy am Nachdruckende verwenden. Der Hydraulikdruck Phy fällt am Nachdruckende von einem hohen Druckniveau P1 auf ein niedrigeres Niveau P2 ab. Nachteil dieses Vorgehens ist, daß beide Druckniveaus einstellungs- und maschinenabhängig und daher schwerer auswertbar sind. Alternativ kann das Digitalsignal "Nachdruckende" durch das Digitalsignal "Werkzeug öffnen" und den Wert der Maschineneinstellgröße "Restkühlzeit" ermittelt werden, da der Zeitpunkt zum Nachdruckende dem Zeitpunkt "Werkzeug öffnen" entspricht abzüglich Restkühlzeit. Die Nachdruckzeit läßt sich somit gemäß der Reglergleichung regeln :

$$\Delta tn = - ((S1/S2)\text{-Sollwert}) \times \text{Verstärkungsfaktor}.$$

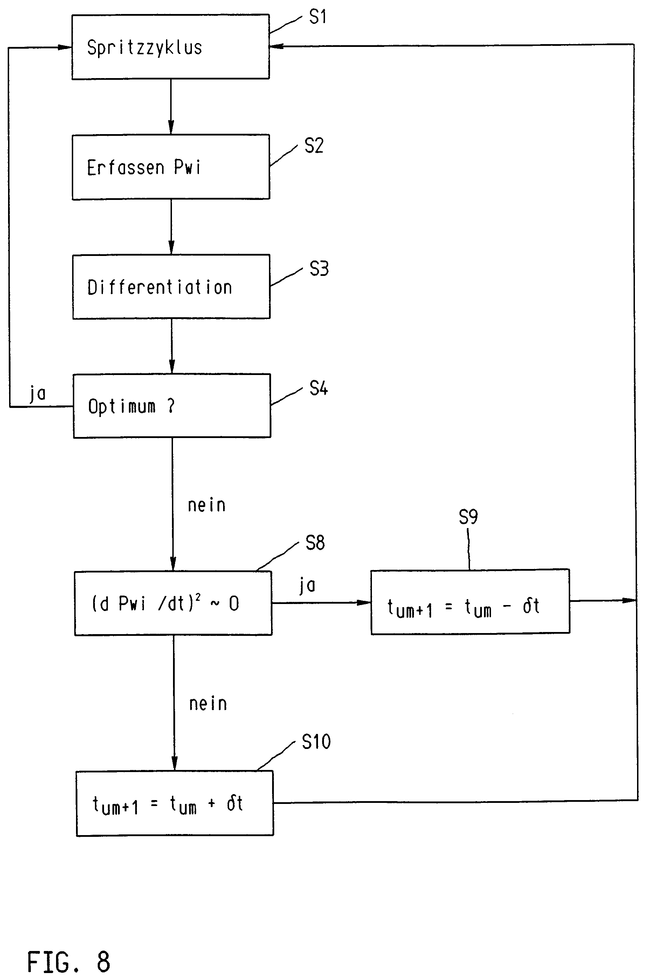

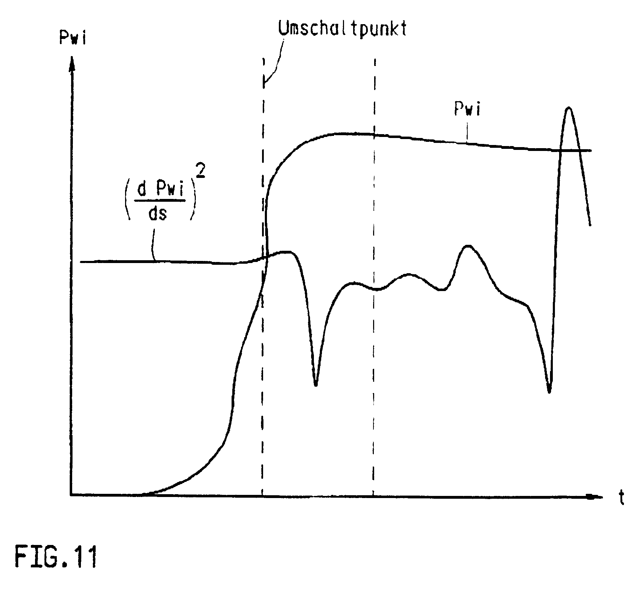

Mit einem ähnlichen Algorithmus ist auch eine Regelung des Umschaltpunktes möglich, wozu im folgenden nun Bezug genommen wird auf die Fign. 5, 6 und 8. In den Fign. 5 und 6 sind einerseits der Werkzeuginnendruck Pwi und andererseits dessen Ableitung zweiten Grades jeweils über der Zeit aufgetragen. Da die Ableitung des Werkzeuginnendrucks Pwi auch über den vom Fördermittel 31 zurückgelegten Weg erfolgen kann, ist insofern eine mit Fig. 5 vergleichbare Darstellung in Fig. 11 dargestellt. Im folgenden wird der im übrigen identische Regelalgorithmus anhand der zeitabhängigen Differenzierung dargestellt.

In Fig. 5 ist eine korrekte Umschaltung dargestellt, bei der sich im Bereich des Umschaltpunktes $t_{um}$ ein monoton oder streng monoton steigender Verlauf der Werkzeuginnendruckkurve ergibt. Anders verhält es sich in Fig. 6, wo eine zu frühe Umschaltung stattfindet und es insofern zu einem Druckeinbruch kommt, der sich in Extremwerten, also Maxima oder Minima der Ableitungen bemerkbar macht. Üblicherweise zeigt sich bei einem unzutreffenden Umschaltpunkt sowohl ein ausgeprägtes lokales Maximum als auch ein zugehöriges lokales Minimum der zweiten Ableitung des Innendrucks. Kriterium ist, ob die Ableitung zweiten Grades einen Extremwert aufweist. Geregelt wird auf einen Zustand der Umschaltung hin, der nicht ganz perfekt ist. Der Fehler eines geringfügig zu frühen Umschaltens ist erforderlich, da ansonsten kein Kriterium besteht, um festzustellen, wenn zu spät umgeschaltet wird. Die Verwendung der Ableitung zweiten Grades des Werkzeuginnendruckes führt dazu, daß ein sehr kleiner Fehler bei der Umschaltung genügt, um nachweislich nur zu einer geringfügigen Verzögerung, jedoch nicht zum Anhalten der Schnecke zu führen. Würde man das gleiche mit der ersten Ableitung des Werkzeuginnendrucks versuchen, könnte als charakteristischer Wert nur ein Nulldurchgang dienen. Dies setzt aber einen Druckeinbruch, mithin also nicht nur eine temporäre Verlangsamung des Druckanstiegs voraus. Das bleibt jedoch üblicherweise nicht ohne Wirkung auf das Formteil.

Eingangs wurde bereits erläutert, warum die Ableitung zweiten Grades von Vorteil ist gegenüber der ersten Ableitung. Überprüft wird in Schritt S8, falls kein Optimum zuvor erzielt wurde, was erst durch einen Vergleich nach wenigstens zwei Spritzzyklen bestimmbar ist, ob

$$(dPwi/dt)^2 \sim 0$$

ist. Ist dies nicht der Fall, wird der Umschaltzeitpunkt $t_{um}$ gemäß Schritt S10 um $\delta t$ erhöht. Lag jedoch bereits ein Wert in einer Größenordnung um Null vor, so kann, wie oben für den Nachdruckzeitregler bereits erläutert, nun der Umschaltzeitpunkt um $\delta t$ verringert werden, um dadurch den Zeitpunkt herauszufinden, bei dem eine optimale Umschaltzeit vorliegt, was nicht nur zur Erzeugung eines qualitativ hochwertigen Teils beiträgt, sondern auch die Zykluszeit verkürzen hilft. Ziel ist, eine Regelung dahingehend zu erreichen, daß der Umschaltzeitpunkt $t_{um}$ dort liegt, wo ein Extremwert der Ableitung zweiten Grades gerade nicht mehr auftritt.

Auch hier gibt es Kriterien, die den Suchalgorithmus beschleunigen, so daß es nicht erforderlich ist, jeden einzelnen Punkt des Werkzeuginnendruckverlaufs aufzusuchen und zu überprüfen. Das Maximum oder Minimum, also der Extremwert $Max(dPwi/dt)^2$ wird nämlich zwischen dem an der Maschine eingestellten Umschaltzeitpunkt $t_{um}$ und dem Zeitpunkt tm gesucht, zu dem das erste Maximum Max(Pwi) des Werkzeuginnendrucks in der Nachdruckphase C auftritt. Als Suchkriterium, von dem ausgehend die Suche starten kann, wird meist ein Schwellwert einer Schneckenposition oder ein fester Zeitpunkt angegeben. Ein Kriterium kann auch ein Werkzeuginnendruck- oder Hydraulikdruck-Schwellwert sein. Hiermit ergibt sich eine Reglergleichung entweder als Funktion der Zeit t oder der Schneckenposition zu:

$$s = (Min)Max((dPwi/dt)^2 - Sollwert) \times Verstärkungsfaktor \times S.faktor.$$

Der S.faktor ist der Skalierungsfaktor und dient der Anpassung an die Werteskala, die in der Maschine als Einstellgröße zur Verfügung steht, wie z.B. Schneckenweg, Spritzvolumen oder Zeit. Der Wert s kann sehr große Werte annehmen, so daß er nicht direkt als Stellgröße zu verwerten ist. Von dem ermittelten Wert wird lediglich das Vorzeichen verwendet und mit einer fest vorgegebenen, kleinen Verstelleinheit multipliziert, um eine sinnvolle Verstellung zu erhalten.

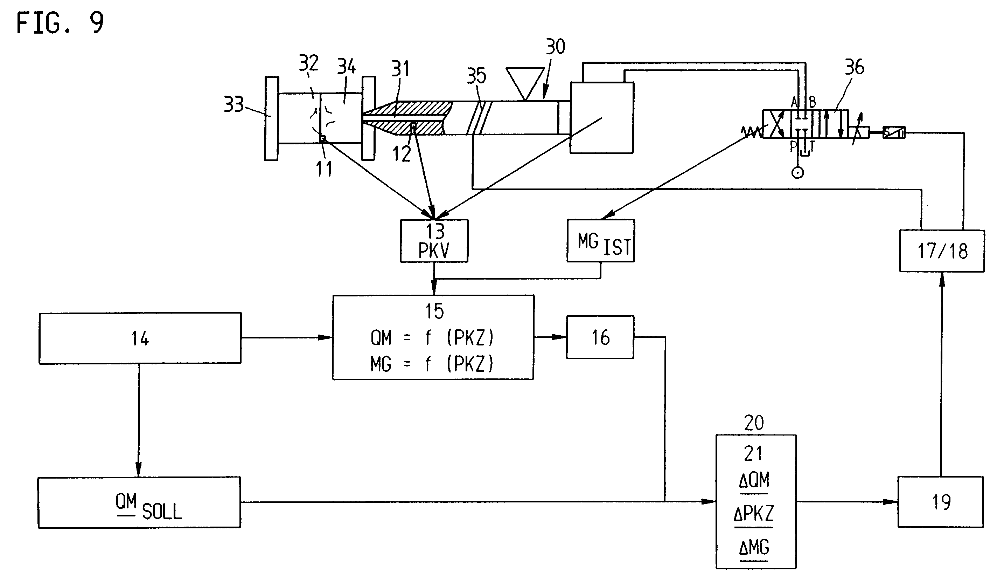

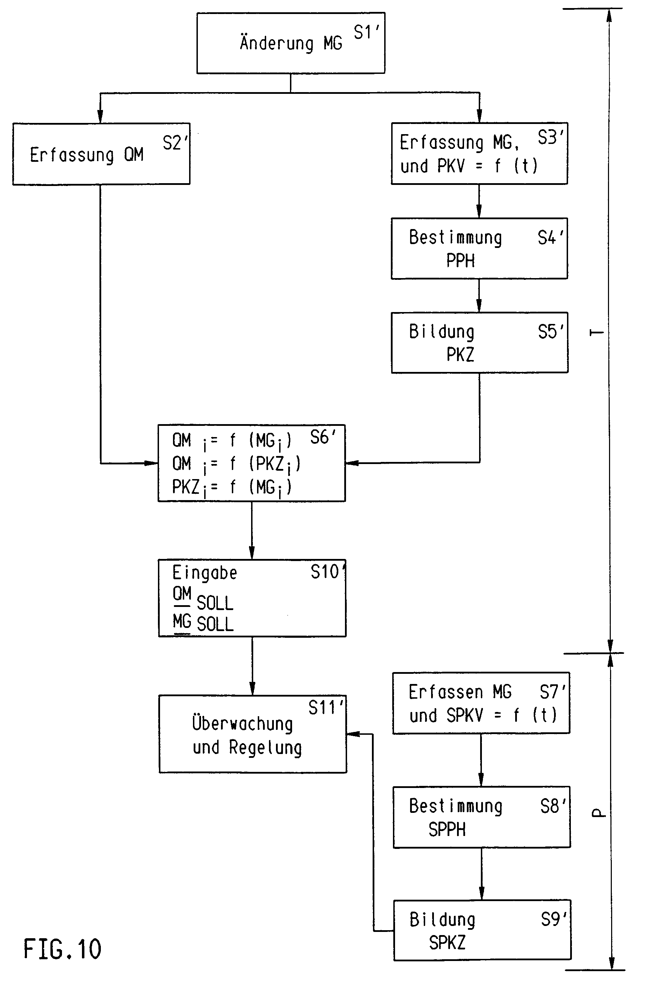

Nachdruckzeitregler und Umschaltpunktregler können Teil eines Mehrgrößenreglers zur Regelung der Qualität der hergestellten Merkmale sein, wie es in der älteren deutschen Patentanmeldung P 44 34 653.0 und der zugehörigen, am 28.09.95 hinterlegten PCT-Anmeldung PCT/DE 95/01345 erläutert ist. Der Offenbarungsgehalt dieser Anmeldungen wird hiermit ausdrücklich auch zum Offenbarungsgehalt der vorliegenden Anmeldung gemacht. Eine Kurzfassung davon ergibt sich aus den Fign. 9 und 10.

Über Sensormittel wie z.B. einen Werkzeuginnendrucksensor 11 und einen Temperaturfühler 12 werden eine Vielzahl von Prozeßparametern während jedes Prozesses ermittelt. Diese Ermittlung erfolgt jedoch zunächst in einer Testphase T, in der systematisch die Maschineneinstellgrößen MG geändert werden. Zu jeder Änderung werden die Qualitätsmerkmale QM der gefertigten Produkte ebenso erfaßt wie die hierbei eingestellten Maschineneinstellgrößen (Schritte S1', S2', S3'). Über Mittel 13 werden Prozeßkurvenverläufe PKV während eines Prozesses erfaßt. Über Eingabemittel 14 können zudem die Qualitätsmerkmale QM eingegeben werden, die durch konventionelle Methoden, aber auch direkt von der Maschine ermittelt werden können.

In Schritt S4' erfolgt eine meist automatische Zergliederung der Prozeßkurvenverläufe in Prozeßphasen PPH, die anhand des Signaleingangs von der Maschine selbst festgelegt werden. Dabei können verschiedene Signale verschiedener Prozeßkurvenverläufe miteinander in Verbindung gebracht werden, um sinnvolle Prozeßphasen PPH festzustellen. Innerhalb dieser Prozeßphasen werden dann die Prozeßphasen kennzeichnende Prozeßkennzahlen PKZ gebildet (Schritt S5'). Über diese Prozeßkennzahlen läßt sich dann eine Verbindung zwischen Maschineneinstellgröße und Qualitätsmerkmal QM ermitteln. Entsprechende Gleichungen sind in Schritt S6' dargestellt. Diese Beziehungen werden durch die Mittel 15 ermittelt. Meist sind weder die Qualitätsmerkmale noch die Maschineneinstellgrößen linear unabhängig voneinander. In Schritt S10' werden Sollwerte $QM_{Soll}$, $MG_{Soll}$ für die Qualitätsmerkmale QM und die Maschineneinstellgrößen MG vorgegeben. Während der Produktionsphase P werden die gleichen Schritte vorgenommen, die in der Testphase bereits erfolgt sind. Es werden Serienprozeßkurvenverläufe SPKV ermittelt (Schritt S7'), diese werden in Serienprozeßphasen SPPH zergliedert (Schritt S8') und durch Serienprozeßkennzahlen SPKZ gekennzeichnet (Schritt S9'). Anhand dieser Serienprozeßkennzahlen kann in Schritt S12' eine Überwachung und Regelung der Qualität der herzustellenden Teile durchgeführt werden.

Hierzu wurde die in der Testphase ermittelte Beziehung in Speichermitteln 16 gespeichert. Die Maschineneinstellgrößen sind dann z.B. über die Einstellvorrichtung 17, 18 beeinflussbar. Ergibt sich in einem Vergleicher 21 ein Differenzwert QM, PKZ, MG, so kann dieser Differenzwert vom Regler 19 dahingehend ausgewertet werden, daß eine Nachregelung stattfindet.

Fig. 11 zeigt den ermittelten Werkzeuginnendruck sowie dessen zweite differentielle Ableitung $(d\,Pwi/ds)^2$ nach dem Weg s des Fördermittels dargestellt über der Zeit. Der Zeitbereich erfaßt bei einem Spritzzyklus an einer Spritzgießmaschine etwa einen Bereich von 0,3 sec vor der Umschaltung bis etwa 0,7 sec. nach der Umschaltung. Dargesetllt ist ein korrekter Umschaltpunkt, bei dem sich die zweite Ableitung im betrachteten Zeitraum ungefähr um Null bewegt. Wird hingegen zu spät umgeschaltet erhält die zweite Ableitung ein ausgeprägtes Minimum. Wird allerdings zu früh umgeschaltet ist ein Unterschied zum Fall der korrekten Umschaltung nicht zu treffen. Aus diesem Grunde wird dahingehend geregelt, daß sich lediglich eine leichte Verminderung des Druckanstiegs einstellt entsprechend einem kleinen Extremwert der zweiten Ableitung, so daß ein möglichst optimaler Umschaltpunkt erzielt wird.

**Patentansprüche**

1.   Verfahren zur Regelung des Werkzeuginnendruckverlaufs an einer zyklisch arbeitenden Maschine mit den Schritten:

   a) Füllen eines Formhohlraums (32) mit einem förderbaren Material mittels eines Fördermittels (31),
   b) Aufbringen eines Drucks zum Verdichten des geförderten Materials unter weiterer Befüllung des Formhohlraums (32),
   c) Aufbringen eines Nachdrucks während der Formung des Produkts im Formhohlraum,
   d) Abbau des Drucks und Entnahme des Produkts,
   e) Erfassen des infolge des Drucks in den Schritten a) bis d) auftretenden Verlaufs des Werkzeuginnendrucks (Pwi) zumindest über der Zeit (t),
   f) wenigstens zweimaliges Differenzieren des Verlaufs des Werkzeuginnendrucks (Pwi) nach der Zeit (t) zur Bestimmung der Ableitungen ersten und zweiten Grades,
   g) Überprüfung des Verlaufs des Werkzeuginnendrucks (Pwi) mittels der in Schritt (f) ermittelten Ableitungen auf das Vorliegen eines Extremwerts der Ableitung zweiten Grades zumindest im Übergangsbereich zwischen den den Schritten b) bis c) entsprechenden Bereichen (B, C,) dieser Werkzeuginnendruckverläufe,
   h) falls sich in Schritt g) ein Extremwert $(Max(dPwi/dt)^2)$ ergibt, Verändern der Zeit bis zum Umschaltzeitpunkt (tum) als Übergang zwischen den Schritten b) und c),
   i) Wiederholen der Schritte a) bis h), bis im Bereich des Umschaltzeitpunkts die Ableitung zweiten Grades keinen Extremwert mehr aufweist.

2.   Verfahren nach Anspruch 1, dadurch gekennzeichnet, daß,

   -   falls die Ableitung zweiten Grades nahezu Null ist, der Umschaltzeitpunkt ($t_{um}$) vorgezogen wird,
   -   die vorausgegangenen Schritte wiederholt werden, bis im Bereich des Umschaltzeitpunkts die Ableitung zweiten Grades einen Extremwert aufweist,
   -   der Umschaltzeitpunkt ($t_{um}$) geringfügig verzögert wird, bis ge rade kein Extremwert mehr auftritt.

3.   Verfahren nach Anspruch 1, dadurch gekennzeichnet, daß der Verlauf des Werkzeuginnendrucks (Pwi) kontinuierlich erfaßt wird und daß der Umschaltzeitpunkt in einem geschlossenen Regelkreis auf einen Wert geregelt wird, so daß ein Extremwert gerade nicht mehr auftritt.

4.   Verfahren nach Anspruch 1, dadurch gekennzeichnet, daß der Extremwert $(Max(dPwi/dt)^2)$ zwischen dem an der

Maschine eingestellten Umschaltzeitpunkt ($t_{um}$) und dem Zeitpunkt (tm) bestimmt wird, zu dem das erste Maximum (Max(Pwi)) des Werkzeuginnendrucks in der Nachdruckphase (C) auftritt.

5. Verfahren zur Regelung des Werkzeuginnendruckverlaufs an einer zyklisch arbeitenden Maschine mit den Schritten:

   a) Füllen eines Formhohlraums (32) mit einem förderbaren Material mittels eines Fördermittels (31),
   b) Aufbringen eines Drucks zum Verdichten des geförderten Mate rials unter weiterer Befüllung des Formhohlraums (32),
   c) Aufbringen eines Nachdrucks während der Formung des Produkts im Formhohlraum,
   d) Abbau des Drucks und Entnahme des Produkts,
   e) Erfassen des infolge des Drucks in den Schritten a) bis d) auftretenden Verlaufs des Werkzeuginnendrucks (Pwi) zumindest über dem vom Fördermittel (31) zurückgelegten Weg (s),
   f) wenigstens zweimaliges Differenzieren des Verlaufs des Werkzeuginnendrucks (Pwi) nach dem Weg (s) zur Bestimmung der Ableitungen ersten und zweiten Grades,
   g) Überprüfung des Verlaufs des Werkzeuginnendrucks (Pwi) mittels der in Schritt (f) ermittelten Ableitungen auf Vorliegen eines Extremwerts der Ableitung zweiten Grades zumindest im Übergangsbereich zwischen den den Schritten b) bis c) entsprechenden Bereichen (B, C) dieser Werkzeuginnendruckverläufe,
   h) falls ein Extremwert ($Max(dPwi/dt)^2$) auftritt, Verändern des vom Fördermittel (31) bis zum Umschaltpunkt zwischen Schritt b) und c) zurückgelegten Weg (s),
   i) Wiederholen der vorausgegangenen Schritte, bis im Bereich des Umschaltpunkts die Ableitung zweiten Grades keinen Extremwert mehr aufweist.

6. Verfahren nach Anspruch 5, dadurch gekennzeichnet, daß,

   - falls die Ableitung zweiten Grades nahezu Null ist, der vom Fördermittel (31) bis zum Umschaltpunkt zurückgelegte Weg (s) verkürzt wird,
   - die vorausgegangenen Schritte wiederholt werden, bis im Bereich des Umschaltpunkts die Ableitung zweiten Grades einen Extremwert aufweist,
   - der vom Fördermittel (31) zurückgelegte Weg geringfügig verlängert wird, bis gerade kein Extremwert mehr auftritt.

7. Verfahren nach Anspruch 5, dadurch gekennzeichnet, daß der Verlauf des Werkzeuginnendrucks (Pwi) kontinuierlich erfaßt wird und daß der Weg bis zum Umschaltpunkt in einem geschlossenen Regelkreis auf einen Wert geregelt wird, so daß ein Maximum gerade nicht mehr auftritt.

8. Verfahren zur Regelung des Werkzeuginnendruckverlaufs an einer zyklisch arbeitenden Maschine mit den Schritten:

   a) Füllen eines Formhohlraums (32) mit einem förderbaren Material mittels eines Fördermittels (31),
   b) Aufbringen eines Drucks zum Verdichten des geförderten Materials unter weiterer Befüllung des Formhohlraums (32),
   c) Aufbringen eines Nachdrucks während der Formung des Produkts im Formhohlraum,
   d) Abbau des Drucks und Entnahme des Produkts,
   e) Erfassen des infolge des Drucks in den Schritten a) bis d) auftretenden Verlaufs des Werkzeuginnendrucks (Pwi) zumindest über der Zeit (t),
   f) wenigstens einmaliges Differenzieren des Verlaufs des Werkzeuginnendrucks (Pwi) nach der Zeit (t),
   g) Überprüfung des Verlaufs des Werkzeuginnendrucks (Pwi) mittels der in Schritt (f) ermittelten Ableitungen auf das Vorliegen einer konstanten Steigung zumindest in den den Schritten c) bis d) entsprechenden Bereichen (C, D) dieser Werkzeuginnendruckverläufe,
   h) falls sich in Schritt g) ein nicht konstant fallender Verlauf ergibt, Verändern der Zeit (tn) bis zum Übergang zwischen den Schritten c) und d),
   i) Wiederholen der Schritte a) bis h), bis sich in Schritt f) ein konstant fallender Verlauf ergibt.

9. Verfahren nach Anspruch 8, dadurch gekennzeichnet, daß in Schritt g)

   - wenigstens ein Punkt aus einer Vielzahl von Punkten in den den Schritten c) und d) entsprechenden Bereichen (C, D) des Verlaufs des Werkzeuginnendrucks (Pwi) ausgewählt wird,

7

- in einem Bereich (B1, B2) vor und nach jedem Punkt geprüft wird, ob keine konstante Steigung vorhanden ist,
- falls keine konstante Steigung vorhanden ist, die Nachdruckzeit (tn), gemessen ab dem Übergang zwischen den Schritten b) und c) verlängert wird,
- Wiederholen der vorausgegangenen Schritte, bis die Überprüfung eine konstante Steigung ergibt.

10. Verfahren nach Anspruch 8, dadurch gekennzeichnet, daß in Schritt g)

- eine Vielzahl von Punkten in den den Schritten c) und d) entsprechenden Bereichen (C, D) des Verlaufs des Werkzeuginnendrucks (Pwi) ausgewählt wird,
- in einem Bereich vor und nach jedem Punkt geprüft wird, ob keine konstante Steigung vorhanden ist,
- falls eine konstante Steigung vorhanden ist, die Nachdruckzeit (tn), gemessen ab dem Übergang zwischen den Schritten b) und c), verkürzt wird,
- Wiederholen der vorausgegangenen Schritte, bis die Überprüfung keine konstante Steigung ergibt,
- geringfügiges Verlängern der Nachdruckzeit (tn), bis gerade eine konstante Steigung vorhanden ist.

11. Verfahren nach Anspruch 8, dadurch gekennzeichnet, daß der Verlauf des Werkzeuginnendrucks (Pwi) kontinuierlich erfaßt wird und daß die Nachdruckzeit (tn) in einem geschlossenen Regelkreis auf einen Wert geregelt wird, so daß eine konstante Steigung gerade noch auftritt.

12. Verfahren nach Anspruch 8, dadurch gekennzeichnet, daß

- die Überprüfung gemäß Schritt g) dadurch erfolgt, daß der Verlauf des Werkzeuginnendrucks (Pwi) einmal nach der Zeit (t) differenziert wird und
- der Wert (S1) der Differentialkurve in einem Bereich (B1) vor dem Punkt (tn) und der Wert (S2) der Differentialkurve in einem Bereich (B2) nach dem Punkt bestimmt werden,
- überprüft wird, ob der Wert (S1) vor dem Punkt, geteilt durch den Wert (S2) nach dem Punkt ungefähr 1 ist.

13. Verfahren nach Anspruch 8, dadurch gekennzeichnet, daß als Ausgangspunkt für die Überprüfung gemäß Schritt g) das Digitalsignal "Nachdruckende" (10) verwendet wird oder von dem Punkt ausgehend überprüft wird, zu dem der Hydraulikdruck (Phy) von einem hohen Niveau (P1) auf ein niedriges Niveau (P2) abfällt.

14. Verfahren nach Anspruch 8, dadurch gekennzeichnet, daß die Nachdruckzeit (tn) gemäß der Reglergleichung

$$\Delta tn = -(S1/S2 - Sollwert) \times Verstärkungsfaktor$$

geregelt wird.

**Claims**

1. A method of controlling the tool internal pressure pattern on a cyclically-operating machine by means of the following steps:

   a) filling of a mould cavity (32) with a conveyable material by way of a conveying means (31),

   b) application of a pressure to compress the conveyed material while the filling of the mould cavity (32) continues,

   c) application of a holding pressure during the moulding of the product in the mould cavity,

   d) pressure reduction and removal of the product,

   e) detection of the tool internal pressure pattern (Pwi) at least as a function of time (t), which pattern occurs as a result of the pressure in steps a) to d),

   f) at least a double differentiation of the pattern of tool internal pressure (Pwi) as a function of time (t),

   g) by way of the derivatives determined in step (f), examination of the pattern of tool internal pressure (Pwi) for the presence of an extreme value for the second-order derivative at least in the regions (B, C) of these tool internal pressure patterns, which regions correspond to steps b) to c),

h) if an extreme value (Max (d Pwi/dt) 2) occurs in step g), modification of the time elapsing until change-over time ($t_{um}$) as the transition between steps b) and c),

i) repetition of steps a) to h) until no further extreme value appears in the region of the change-over point for the second-order derivative.

2. A method according to claim 1, characterised in that

- if the second-order derivative is almost zero, the change-over moment ($t_{um}$) is advanced,
- the preceding steps are repeated until the second-order derivative has an extreme value in the region of the change-over moment,
- the change-over moment ($t_{um}$) is delayed slightly until an extreme value just no longer occurs.

3. A method according to claim 2, characterised in that the course of the tool internal pressure (Pwi) is detected continuously and that the change-over moment is controlled in a closed control moved to a value so that an extreme value just no longer occurs.

4. A method according to claim 2, characterised in that the extreme value (Max (d Pwi/dt) 2) is determined between the change-over moment ($t_{um}$) set on the machine and the moment (tm) at which the first maximum (Max (Pwi)) of tool internal pressure appears in the holding pressure phase (C).

5. A method of controlling the tool internal pressure pattern on a cyclically-operating machine by means of the following steps:

a) filling of a mould cavity (32) with a conveyable material by way of a conveying means (31),

b) application of a pressure to compress the conveyed material while the filling of mould cavity (32) continues,

c) application of a holding pressure during the moulding of the product in the mould cavity,

d) pressure reduction and removal of the product,

e) detection of the pattern of tool internal pressure (Pwi) at least as a function of distance (s) travelled by the conveying means (31), which pattern occurs as a result of the pressure in steps a) to d),

f) at least double differentiation of the pattern of tool internal pressure (Pwi) as a function of travel (s), for determination of the first and second-order derivatives,

g) by way of the derivatives determined in step (f), examination of the course of tool internal pressure (Pwi) for the presence of an extreme value in the second-order derivative at least in regions (B, C) of these tool internal pressure patterns, where such regions correspond to steps b) to c),

h) if an extreme value (Max (d Pwi/dt) 2) occurs, modification of the distance (s) travelled by conveying means (31) up to the transition between steps b) and c),

i) repetition of the preceding steps until no further extreme value is exhibited by the second-order derivative as far as the region of the change-over point.

6. A method according to claim 5, characterised in that

- if the second-order derivative is almost zero, then distance (s) travelled by conveying means (31) up to the change-over point is shortened,
- the preceding steps are repeated until the second-order derivative exhibits an extreme value in the region of the change-over point,
- the distance travelled by conveying means (31) is extended slightly until an extreme value just no longer occurs.

7. A method according to claim 5, characterised in that the pattern of tool internal pressure (Pwi) is detected continuously and that the distance up to the change-over point is controlled in a closed-controlled loop to a value so that a maximum just no longer occurs.

8. A method of controlling the tool internal pressure pattern on a cyclically-operating machine by means of the following steps:

   a) filling of a mould cavity (32) with a conveyable material by way of conveying means (31),

   b) application of a pressure to compress the conveyed material while the filling of mould cavity (32) continues,

   c) application of a holding pressure during the moulding of the product in the mould cavity,

   d) pressure reduction and removal of the product,

   e) detection of the pattern of tool internal pressure (Pwi) at least as a function of time (t), where such pattern occurs as a result of the pressure in steps a) to d),

   f) at least a single differentiation of the pattern of tool internal pressure (Pwi) as a function of time (t),

   g) by way of the derivatives determined in step (f), examination of the pattern of tool internal pressure (Pwi) for the presence of a constant ascending slope at least in the regions (C, D) of these tool internal pressure patterns, whereas such regions correspond to steps c) to d),

   h) if a non-constant ascending course occurs in step g), modification of time (tn) up to the transition between steps c) and d),

   i) repetition of steps a) to h) until a constantly ascending course appears in step f).

9. A method according to claim 8, characterised in that in step g)

   - at least one point is selected from a plurality of points in the regions (C, D) of the pattern of tool internal pressure (Pwi), where such regions correspond to steps c) and d),

   - there is examination in a region (B1, B2) upstream and downstream of each point whether there is no constant ascending slope,

   - in the absence of a constant ascending slope, holding pressure time (tn) is extended, measured with effect from the transition between steps b) and c),

   - repetition of the preceding steps until the examination results in a constant ascending slope.

10. A method according to claim 8, characterised in that in step g)

   - a plurality of points is selected in the regions (C, D) of the pattern of tool internal pressure (Pwi),

   - there is examination in a region upstream and downstream of each point whether there is no constant ascending slope,

   - in the presence of a constant ascending slope, holding pressure time (tn) is shortened, measured with effect from the transition between steps b) and c),

   - repetition of the preceding steps until the examination does not result in a constant ascending slope,

   - slight extension of the holding pressure time (tn) until a constant ascending slope is just present.

11. A method according to claim 8, characterised in that the pattern of tool internal pressure (Pwi) is detected continuously and that holding pressure time (tn) is controlled in a closed control loop to a value so that a constant ascending slope just still occurs.

**12.** A method according to claim 8, characterised in that

- the check according to step g) takes place in that the pattern of tool internal pressure (Pwi) is differentiated once as a function of time (t) and

- the value (S1) of the differential curve in a region (B1) upstream of point (tn) and value (S2) of the differential curve in a region (B2) downstream of the point are determined

- it is examined whether value (S1) upstream of the point divided by value (S2) downstream of the point is approximately 1.

**13.** A method according to claim 8, characterised in that the digital signal "end of holding pressure" (10) is used as a starting point for the check according to step g) or there is examination on the basis of the point at which hydraulic pressure (Phy) decreases from a high level (P1) to a low level (P2).

**14.** A method according to claim 8, characterised in that holding pressure time (tn) is controlled according to the controller equation

$$\Delta tn = -(S1/S2 - \text{desired value}) \times \text{amplification factor}.$$

## Revendications

**1.** Procédé de régulation de la courbe de pression interne d'outils dans une machine à fonctionnement cyclique comportant les étapes suivantes

a) remplissage d'une cavité de moulage (32) avec un matériau transportable à l'aide d'un moyen de transport (31),
b) application d'une pression pour compresser le matériau transporté tout en continuant de remplir la cavité de moulage (32),
c) application d'un maintien en pression pendant le moulage du produit dans la cavité de moulage,
d) réduction de la pression et prélèvement du produit,
e) enregistrement de la courbe de la pression interne d'outils (Pwi), survenant par suite de la pression appliquée au cours des étapes a) à d), au moins en fonction du temps (t),
f) différenciation, au moins deux fois, de la courbe de la pression interne d'outils (Pwi) suivant le temps (t) afin de déterminer les dérivées de premier et de deuxième degré,
g) vérification de la courbe de la pression interne d'outils (Pwi) au moyen des dérivées, déterminées au cours de l'étape (f) quant à la présence d'une valeur extrême de la dérivée de deuxième degré au moins dans le domaine de transition entre les domaines (B,C) correspondant aux étapes b) à c) de ces courbes de pression internes d'outils,
h) dans le cas où l'on obtient une valeur extrême $(\text{Max}(dPwi/dt)^2)$ au cours de l'étape (g) variation du temps jusqu'à l'instant de commutation (tum) en tant que transition entre les étapes b) et c),
i) renouvellement des étapes a) à h) jusqu'à ce que dans le domaine de l'instant de commutation la dérivée de deuxième degré ne présente plus de valeur extrême.

**2.** Procédé selon la revendication 1, caractérisé en ce que

- dans le cas où la dérivée de deuxième degré est presque égale à zéro, l'instant de commutation $(t_{um})$ est avancé,
- les étapes précédentes sont renouvelées jusqu'à ce que dans le domaine de l'instant de commutation la dérivée de deuxième degré présente une valeur extrême,
- l'instant de commutation $(t_{um})$ est légèrement retardé jusqu'à ce qu'il ne se produise précisément plus de valeur extrême.

**3.** Procédé selon la revendication 1, caractérisé en ce que la courbe de la pression interne d'outils (Pwi) est enregistrée en continu et en ce que l'instant de commutation est réglé dans un circuit de régulation fermé sur une valeur de manière qu'une valeur extrême ne se produise précisément plus.

4. Procédé selon la revendication 1, caractérisé en ce que la valeur extrême (Max(dPwi/dt)$^2$) est déterminée entre l'instant de commutation ($t_{um}$) sélectionné sur la machine et l'instant (tm) auquel le premier maximum (Max(Pwi)) de la pression interne d'outils apparaît au cours de la phase de maintien en pression (C).

5. Procédé de régulation de la courbe de pression interne d'outils dans une machine à fonctionnement cyclique comportant les étapes suivantes

> a) remplissage d'une cavité de moulage (32) avec un matériau transportable à l'aide d'un moyen de transport (31),
> b) application d'une pression pour compresser le matériau transporté tout en continuant de remplir la cavité de moulage (32),
> c) maintien en pression pendant le moulage du produit dans la cavité de moulage,
> d) réduction de la pression et prélèvement du produit,
> e) enregistrement de la courbe de la pression interne d'outils (Pwi), se produisant au cours des étapes a) à d) au moins en fonction de la distance (s) parcourue par le moyen de transport (31),
> f) différenciation, au moins deux fois, de la courbe de la pression interne d'outils (Pwi) suivant la distance (s) afin de déterminer les dérivées de premier et de deuxième degré,
> g) vérification de la courbe de la pression interne d'outils (Pwi) au moyen des dérivées, déterminées au cours de l'étape (f) quant à la présence d'une valeur extrême de la dérivée de deuxième degré au moins dans le domaine de transition entre les domaines (B,C) correspondant aux étapes b) à c) de ces courbes de pression internes d'outils,
> h) dans le cas où survient une valeur extrême (Max(dPxi/dt)$^2$), variation de la distance (s) parcourue par le moyen de transport (31) jusqu'au point de commutation entre l'étape b) et c),
> i) renouvellement des étapes précédentes jusqu'à ce que dans le domaine du point de commutation la dérivée de deuxième degré ne présente plus de valeur extrême

6. Procédé selon la revendication 5, caractérisé en ce que

> - dans le cas où la dérivée de deuxième degré est presque égale à zéro la distance (s) parcourue par le moyen de transport (31) jusqu'au point de commutation est raccourcie,
> - les étapes précédentes sont renouvelées jusqu'à ce que dans le domaine du point de commutation la dérivée de deuxième degré présente une valeur extrême,
> - la distance parcourue par le moyen de transport (31) est légèrement allongée jusqu'à ce qu'aucune valeur extrême ne se produise précisément plus.

7. Procédé selon la revendication 5, caractérisé en ce que la courbe de la pression interne d'outils (Pwi) est enregistrée en continu et en ce que la distance jusqu'au point de commutation est réglée, dans un circuit de régulation fermé, sur une valeur telle qu'il ne se produise précisément plus un maximum.

8. Procédé de régulation de la courbe de pression interne d'outils dans une machine à fonctionnement cyclique comportant les étapes suivantes

> a) remplissage d'une cavité de moulage (32) avec un matériau transportable à l'aide d'un moyen de transport (31),
> b) application d'une pression pour compresser le matériau transporté tout en continuant de remplir la cavité de moulage (32),
> c) maintien en pression pendant le moulage du produit dans la cavité de moulage,
> d) réduction de la pression et prélèvement du produit,
> e) enregistrement de la courbe de la pression interne d'outils (Pwi), survenant par suite de la pression appliquée au cours des étapes a) à d), au moins en fonction du temps (t),
> f) différenciation, au moins une fois, de la courbe de la pression interne d'outils (Pwi) suivant le temps (t),
> g) vérification de la courbe de la pression interne d'outils (Pwi) au moyen des dérivées, déterminées au cours de l'étape (f), quant à la présence d'une augmentation constante au moins dans les domaines (C,D) correspondant aux étapes c) à d) de ces courbes de pression interne d'outils,
> h) dans le cas où au cours de l'étape g) on obtient une courbe non décroissante de manière constante, variation du temps (tn) jusqu'à la transition entre les étapes c) et d),
> i) renouvellement des étapes a) à h), jusqu'à ce qu'au cours de l'étape f) on ait une courbe décroissant de manière constante.

9. Procédé selon la revendication 8, caractérisé en ce qu'au cours de l'étape g)

   - on sélectionne au moins un point parmi un grand nombre de points dans les domaines (C,D) correspondant aux étapes c) et d) de la courbe de la pression interne d'outils (Pwi),
   - on vérifie dans un domaine (B1,B2) avant et après chaque point s'il n'y a pas une pente constante,
   - dans le cas où il n'y a pas pente constante, le temps de maintien en pression (tn), mesuré à partir de la transition entre les étapes b) et c), est prolongé,
   - renouvellement des étapes précédentes jusqu'à ce que la vérification donne une pente constante.

10. Procédé selon la revendication 8, caractérisé en ce qu'au cours de l'étape g)

    - on sélectionne un grand nombre de points dans les domaines (C,D) correspondant aux étapes c) et d) de la courbe de la pression interne d'outils (Pwi),
    - on vérifie dans un domaine avant et après chaque point s'il n'y a pas pente constante,
    - dans le cas où il y a pente constante, le temps de maintien en pression (tn), mesuré à partir de la transition entre les étapes b) et c), est raccourci,
    - renouvellement des étapes précédentes jusqu'à ce que la vérification ne donne pas une pente constante,
    - légère prolongation du temps de maintien en pression (tn) jusqu'à ce qu'il y ait précisément une pente constante.

11. Procédé selon la revendication 8, caractérisé en ce que la courbe de la pression interne d'outils (Pwi) est enregistrée en continu et en ce que le temps de maintien en pression (tn) est réglé, dans un circuit de régulation fermé, sur une valeur, de manière qu'il se produise encore précisément une pente constante.

12. Procédé selon la revendication 8, caractérisé en ce que

    - la vérification selon l'étape g) s'effectue en ce que la courbe de la pression interne (Pwi) est différenciée une fois suivant le temps (t) et
    - la valeur (S1) de la courbe différentielle est déterminée dans un domaine (B1) avant le point (tn) et la valeur (S2) de la courbe différentielle est déterminée dans un domaine (B2) après ce point,
    - on vérifie si la valeur (S1) avant le point divisée par la valeur (S2) après le point est environ égale à 1.

13. Procédé selon la revendication 8, caractérisé en ce qu'on utilise comme point de départ de la vérification selon l'étape g), le signal numérique 《 fin de maintien en pression 》(10) ou on vérifie à partir du point auquel la pression hydraulique (Phy) décroît d'un niveau haut (P1) à un niveau bas (P2).

14. Procédé selon la revendication 8, caractérisé en ce que le temps de maintien en pression (tn) est réglé suivant l'équation de régulation

$$\Delta\, tn = -(S1/S2 - \text{valeur de consigne}) \times \text{facteur d'amplification.}$$

FIG. 1

FIG. 2

EP 0 854 778 B1

FIG. 3

FIG. 4

15

FIG. 5

FIG. 6

FIG. 7

```
                    ┌──────────────────┐  S1
              ┌────→│   Spritzzyklus   │←──────────────────────────┐
              │     └──────────────────┘                           │
              │              │                                     │
              │              ↓                                     │
              │     ┌──────────────────┐  S2                       │
              │     │   Erfassen Pwi   │                           │
              │     └──────────────────┘                           │
              │              │                                     │
              │              ↓                                     │
              │     ┌──────────────────┐  S3                       │
              │     │  Differentiation │                           │
              │     └──────────────────┘                           │
              │              │                                     │
              │              ↓                                     │
         ja   │     ┌──────────────────┐  S4                       │
         ←────┘     │    Optimum ?     │                           │
                    └──────────────────┘                           │
                             │                                     │
                           nein                                    │
                             │                           S9        │
                             ↓                                     │
                    ┌──────────────────┐  S8   ja  ┌──────────────────┐
                    │  (d Pwi /dt)² ~ 0 │─────────→│ tum+1 = tum − δt │──┤
                    └──────────────────┘          └──────────────────┘  │
                             │                                          │
                           nein                                         │
                             │                  S10                     │
                             ↓                                          │
                    ┌──────────────────┐                                │
                    │ tum+1 = tum + δt │────────────────────────────────┘
                    └──────────────────┘
```

$(d \, Pwi \, /dt)^2 \sim 0$

$t_{um+1} = t_{um} - \delta t$

$t_{um+1} = t_{um} + \delta t$

FIG. 8

18

FIG. 9

EP 0 854 778 B1

Änderung MG S1'

Erfassung QM S2'

Erfassung MG, S3'
und PKV = f (t)

Bestimmung S4'
PPH

Bildung S5'
PKZ

$QM_i = f (MG_i)$ S6'
$QM_i = f (PKZ_i)$
$PKZ_i = f (MG_i)$

Eingabe S10'
$\underline{QM}$ SOLL
$\underline{MG}$ SOLL

Überwachung S11'
und Regelung

Erfassen MG S7'
und SPKV = f (t)

Bestimmung S8'
SPPH

Bildung S9'
SPKZ

T

P

FIG.10

FIG.11